# EUROPÄISCHE PATENTANMELDUNG

(11) **EP 4 687 187 A1**
(43) Veröffentlichungstag der Anmeldung: **04.02.2026**
(21) Anmeldenummer: 24191682.4
(22) Anmeldetag: 30.07.2024
(51) Int. Cl.: H01M 10/04, H01M 10/052, H01M 50/107, H01M 50/119, H01M 50/167

(54) **VERFAHREN ZUR HERSTELLUNG EINES ELEKTROCHEMISCHEN ENERGIESPEICHERELEMENTS**

(71) Anmelder: VARTA Microbattery GmbH, 73479 Ellwangen Jagst (DE)
(72) Erfinder: Bühler, Berthold, 73479 Ellwangen (DE); Drews, Verena, 89537 Giengen (DE); Geiger, Michael, 73479 Ellwangen (DE); Kieninger, Dominik, 73492 Rainau (DE); Rieker, Patrick, 73479 Ellwangen (DE)
(74) Vertreter: Ostertag & Partner Patentanwälte mbB

(57) **Zusammenfassung**

Es werden ein Verfahren zur Herstellung eines elektrochemischen Energiespeicherelements (100) in Form einer zylindrischen Rundzelle mit einem Gehäuse aus einem Becher (10) und einem Deckel (30) und ein gemäß dem Verfahren herstellbares Energiespeicherelement (100) vorgeschlagen. Das Verfahren umfasst die folgenden Verfahrensschritte: Zunächst wird ein metallischer Becher (10) mit einem Becherboden (11), einer umlaufenden Becherwandung (12) und einer Becheröffnung (13) bereitgestellt. Die Becherwandung (12) untergliedert sich in Längsrichtung in einen ersten Abschnitt (14) und einen zweiten Abschnitt (15). Der erste Abschnitt (14) erstreckt sich zwischen der Becheröffnung (13) und dem zweiten Abschnitt (15). Der zweite Abschnitt (15) erstreckt sich zwischen dem ersten Abschnitt (14) und dem Becherboden (11). Die Wandstärke der Becherwandung in dem ersten Abschnitt (14) ist größer als die Wandstärke der Becherwandung in dem zweiten Abschnitt (15). Weiterhin ist der Außendurchmesser der Becherwandung in dem ersten Abschnitt (14) größer als der Außendurchmesser der Becherwandung in dem zweiten Abschnitt (15). In den inneren Bereich des Bechers (10), der von dem zweiten Abschnitt (15) der Becherwandung umgeben ist, werden elektrochemische Komponenten (20) eingefügt. Weiterhin umfasst das Verfahren eine weitergehende Montage des elektrochemischen Energiespeicherelements. Erfindungsgemäß erfolgt nach dem Einfügen von elektrochemischen Komponenten (20) in den inneren Bereich des Bechers (10) eine Umformung des ersten Abschnitts (14) der Becherwandung von außen nach innen derart, dass sich der Außendurchmesser der Becherwandung im ersten Abschnitt (14) dem Außendurchmesser der Becherwandung im zweiten Abschnitt (15) angleicht.

## Beschreibung

Die vorliegende Erfindung betrifft ein Verfahren zur Herstellung eines elektrochemischen Energiespeicherelements in Form einer zylindrischen Rundzellen. Weiterhin betrifft die Erfindung ein elektrochemisches Energiespeicherelement, das insbesondere mit einem solchen Verfahren herstellbar ist.

### ANWENDUNGSGEBIET UND STAND DER TECHNIK

Jedes elektrochemisches Energiespeicherelement im Sinne der vorliegenden Anmeldung umfasst mindestens eine positive und mindestens eine negative Elektrode, welche durch einen Separator voneinander getrennt sind. In elektrochemischen Energiespeicherelementen findet eine elektrochemische, energieliefernde Reaktion statt, welche sich aus zwei elektrisch miteinander gekoppelten, aber räumlich voneinander getrennten Teilreaktionen zusammensetzt. Eine bei vergleichsweise niedrigem Redoxpotential stattfindende Teilreaktion läuft an der negativen Elektrode ab. Eine andere Teilreaktion läuft bei vergleichsweise hohem Redoxpotential an der positiven Elektrode ab. Bei der Entladung werden an der negativen Elektrode durch einen Oxidationsprozess Elektronen freigesetzt. Dies resultiert in einem Elektronenstrom über einen äußeren Verbraucher zur positiven Elektrode, von der eine entsprechende Menge an Elektronen aufgenommen wird. An der positiven Elektrode findet also ein Reduktionsprozess statt. Zeitgleich kommt es zum Zwecke des Ladungsausgleichs zu einem der Elektrodenreaktion entsprechenden lonenstrom innerhalb des elektrochemischen Energiespeicherelements. Dieser lonenstrom durchquert den Separator und wird durch einen ionenleitenden Elektrolyten gewährleistet.

In sekundären (wieder aufladbaren) elektrochemischen Energiespeicherelementen ist diese Entladereaktion reversibel. Es besteht also die Möglichkeit, die bei der Entladung erfolgte Umwandlung der chemischen Energie in elektrische Energie wieder umzukehren.

Ein oftmals verwendetes elektrochemisches Energiespeicherelement ist die Lithium-Ionen-Zelle. Die Lithium-Ionen-Zelle umfasst Elektroden, die Lithium-Ionen reversibel aufnehmen und wieder abgeben können, sowie einen Lithium-Ionen enthaltenden Elektrolyten.

Bei elektrochemischen Energiespeicherelementen und insbesondere auch bei Lithium-lonen-Zellen sind verschiedene Bauformen bekannt. Neben prismatischen Formen sind Knopfzellen und zylindrische Rundzellen weit verbreitet. Sowohl Knopfzellen als auch Rundzellen haben eine runde und insbesondere eine kreisförmige Grundfläche. Dabei unterscheiden sich zylindrische Rundzellen von Knopfzellen darin, dass Knopfzellen eine Höhe aufweisen, die geringer als ihr Durchmesser ist. Zylindrische Rundzellen weisen hingegen eine Höhe auf, die größer als ihr Durchmesser ist.

Die Gehäuse bei elektrochemischen Energiespeicherelementen sind oftmals aus einem becherartigen Element (kurz: Becher) und einem deckelartigen Element (kurz: Deckel) zusammengesetzt. Im Inneren des Gehäuses werden die elektrochemischen Komponenten des Energiespeicherelements angeordnet und elektrisch mit dem Gehäuse und/oder den Polen des Energiespeicherelements kontaktiert.

Die Elektroden eines Energiespeicherelements können beispielsweise in Form eines wickelförmigen oder eines stapelförmigen Elektroden-Separator-Verbunds vorliegen. Energiespeicherelemente, die einen Elektroden-Separator-Verbund in Form eines Wickels umfassen, weisen oftmals eine zylindrische Bauform auf und können beispielsweise als zylindrische Rundzellen ausgebildet sein.

Der Becher des Gehäuses für das Energiespeicherelement wird oftmals durch einen Umformprozess aus einem Blechzuschnitt gebildet. Als Materialien für den Blechzuschnitt kommen beispielsweise vernickelter Stahl, Aluminium oder Edelstahl in Frage. Zum Umformen kommt in der Regel das sogenannte Tiefziehen zum Einsatz. Hierbei wird der Blechzuschnitt in einem einseitig offenen Hohlkörper umgeformt. Beispielsweise erfolgt das Tiefziehen in einer Presse, wobei ein Prägestempel auf den späteren Boden des zu fertigenden Tiefziehteils drückt. Der Prägestempel bewegt sich dabei fortlaufend weiter, wobei der Blechzuschnitt durch einen sogenannten Ziehring gedrückt wird und nachrutscht. Auf diese Weise kann ein Becher mit einer umlaufenden Seitenwandung ausgeformt werden, der einen Becherboden und auf der gegenüberliegenden Seite eine Becheröffnung aufweist.

Im Zuge der Montage der Energiespeicherelemente werden die elektrochemischen Komponenten der Zelle, beispielsweise der wickelförmige Elektroden-Separator-Verbund, über die Becheröffnung in den Becher eingesetzt. Anschließend kann der Anschluss der Elektroden und die Montage der Deckelkomponenten erfolgen.

Für die Produktion von zylindrischen Rundzellen werden herkömmlicherweise solche Becher verwendet, die im Bereich der Becherwandung eine konstante Wandstärke aufweisen. Es ist jedoch auch bereits bekannt, sogenannte gestufte Becher zu verwenden, die im oberen Bereich des Bechers, also in Richtung der Becheröffnung, eine größere Wandstärke als im Bereich darunter aufweisen. Durch diese Ausbildung des Bechers kann im oberen Bereich des Bechers, in dem die Montage des Deckels erfolgt, eine erhöhte Stabilität erreicht werden. Insbesondere kann durch diese Verstärkung im oberen Bereich des Bechers eine besonders hohe Zuhaltekraft für die Dichtfunktion bei der Deckelmontage erreicht werden. Gleichzeitig wird durch die geringere Wandstärke im unteren Bereich des Bechers eine vorteilhafte Material- und Gewichtsreduktion erzielt.

Durch den Tiefziehprozess bei der Herstellung des Bechers bedingt, befindet sich die Abstufung in der Wandstärke des Bechers auf der Außenseite des Bechers. Das heißt also, dass der Innendurchmesser des Bechers gleichbleibend ist, wohingegen der Außendurchmesser des Bechers im oberen Bereich des Bechers größer als im unteren Bereich ist. Der Unterschied im Außendurchmesser zwischen dem oberen Bereich und dem unteren Bereich des Bechers kann bei einer üblichen zylindrischen Rundzelle mit dem Formfaktor 18650 beispielsweise 0,2 mm betragen. So kann beispielsweise der Außendurchmesser im oberen Bereich 18,3 mm und der Außendurchmesser im unteren Bereich 18,1 mm betragen.

Der über die Länge des Bechers gleichbleibende Innendurchmesser ist für die Einfügung der elektrochemischen Komponenten, wie beispielsweise einem wickelförmigen Elektroden-Separator-Verbund, vorteilhaft. Nachteilig hierbei ist jedoch, dass der Nenndurchmesser der Rundzelle durch den maximalen Außendurchmesser im oberen Bereich des Bechers definiert wird und dass daher das Innenvolumen im Verhältnis zu diesem Nenndurchmesser nicht optimal ausgenutzt werden kann.

### AUFGABE UND LÖSUNG

Vor diesem Hintergrund stellt sich die Erfindung die Aufgabe, ein verbessertes elektrochemisches Energiespeicherelement bereitzustellen. Das Gehäuse des Energiespeicherelements soll möglichst stabil bei geringem Gewicht ausgeführt werden, wobei gleichzeitig das durch das Gehäuse des Energiespeicherelements zur Verfügung gestellte Innenraumvolumen im Verhältnis zum Nenndurchmesser der Zelle maximiert werden soll, um so die gravimetrische/volumetrische Leistungs- und Energiedichte des Energiespeicherelements optimieren zu können.

Diese Aufgabe wird durch das nachfolgend erläuterte Verfahren zur Herstellung eines elektrochemischen Energiespeicherelements in Form einer zylindrischen Rundzelle gelöst. Die zylindrische Rundzelle umfasst ein Gehäuse mit einem Becher und einem Deckel. Bei der Herstellung der zylindrischen Rundzelle wird ein gestufter Becher gemäß der nachfolgenden Beschreibung der Merkmale i. bis iii. verwendet. Das Verfahren zeichnet sich durch die folgenden Verfahrensschritte aus:
a. Bereitstellen eines metallischen Bechers mit einem Becherboden, einer umlaufenden Becherwandung und einer Becheröffnung, wobei
   i. sich die Becherwandung in Längsrichtung in einen ersten Abschnitt und einen zweiten Abschnitt untergliedert, und wobei sich der erste Abschnitt zwischen der Becheröffnung und dem zweiten Abschnitt erstreckt und der zweite Abschnitt sich zwischen dem ersten Abschnitt und dem Becherboden erstreckt, und wobei
   ii. die Wandstärke der Becherwandung in dem ersten Abschnitt größer ist als die Wandstärke der Becherwandung in dem zweiten Abschnitt, und wobei
   iii. der Außendurchmesser der Becherwandung in dem ersten Abschnitt größer ist als der Außendurchmesser der Becherwandung in dem zweiten Abschnitt,
b. Einfügen von elektrochemischen Komponenten in den Becher, insbesondere den inneren Bereich des Bechers, der von dem zweiten Abschnitt der Becherwandung umgeben ist, wobei die elektrochemischen Komponenten vorzugsweise ausschließlich in den inneren Bereich des Bechers, der von dem zweiten Abschnitt der Becherwandung umgeben ist, eingefügt werden,
c. weitergehende Montage des elektrochemischen Energiespeicherelements. Erfindungsgemäß ist das Verfahren weiter dadurch gekennzeichnet, dass
d. nach dem Einfügen von elektrochemischen Komponenten in den inneren Bereich des Bechers eine Umformung des ersten Abschnitts der Becherwandung von außen nach innen derart erfolgt, dass sich der Außendurchmesser der Becherwandung im ersten Abschnitt dem Außendurchmesser der Becherwandung im zweiten Abschnitt angleicht.

Bei der Umformung gemäß Merkmal d) handelt es sich insbesondere um eine mechanische Umformung des ersten Abschnitts der Becherwandung. In besonders vorteilhafter Weise kann dies Umformung durch ein Eindrücken des ersten Abschnitts der Becherwandung erreicht werden.

In besonders bevorzugten Ausführungsformen kann für die Umformung ein Werkzeug in Form einer Spannhülse/Spannzange verwendet werden. Beispielsweise kann die Spannhülse auf den Becher im Bereich des ersten Abschnitts aufgesetzt werden und zusammen mit dem Becher in eine übliche Spannvorrichtung, beispielsweise eine Dreibackenfutterspannvorrichtung, eingesetzt werden. Mittels der Spannvorrichtung kann anschließend die Umformung radial nach innen erfolgen.

In besonders bevorzugter Weise kann eine fein segmentierte Spannhülse verwendet werden, sodass eine möglichst runde Becheraußengeometrie im Wesentlichen ohne Werkzeugabdrücke erhalten wird. Vorzugsweise wird eine Spannhülse aus Federstahl eingesetzt. Allgemein eignet sich eine Spannhülse mit möglichst vielen dünnen Längsschlitzen, um Verformungen und/oder einen Abrieb auf der Außenfläche des Bechers zu vermeiden. Geeignet sind beispielsweise Spannhülsen mit 3 bis 48 Segmenten. Besonders geeignet ist beispielsweise eine Spannhülse mit 8 oder, ganz besonders bevorzugt, mit 24 Segmenten. So haben Versuche der Erfinder gezeigt, dass bei der Verwendung einer Spannhülse mit 24 Segmenten bei der Umformung ein sehr gutes Ergebnis erreicht wird, wobei optisch nur minimale Aufwerfungen nachweisbar sind und keine Beschädigung und kein Abrieb an der Außenseite des Bechers auftritt.

In anderen Ausführungsformen des Verfahrens kann eine Ziehbuchse für die Umformung des ersten Abschnitts der Becherwendung eingesetzt werden.

In anderen Ausführungsformen des Verfahrens kann eine Bördelbuchse für die Umformung eingesetzt werden. Diese Ausgestaltung des Verfahrens hat den besonderen Vorteil, dass die Umformung in einem Verfahrensschritt zusammen mit einem Verschließen des Gehäuses vorgenommen werden kann.

Besonders vorteilhaft ist es, wenn bei der Umformung des ersten Abschnitts der Becherwandung auf den übrigen Becher, also den zweiten Abschnitt der Becherwandung, keine Spannkraft ausgeübt wird.

Die Umformung des ersten Abschnitts der Becherwandung erfolgt vorzugsweise derart, dass der Außendurchmesser der Becherwandung im ersten Abschnitt dem Außendurchmesser der Becherwandung im zweiten Abschnitt entspricht, so dass hieraus ein Becher resultiert, der über die gesamte Länge des Bechers einen konstanten Außendurchmesser aufweist.

Prinzipiell ist es auch möglich, dass durch die Umformung nicht eine vollständige Angleichung des Außendurchmessers im Bereich des ersten Abschnitts und des zweiten Abschnitts der Becherwandung erreicht wird, sondern dass der Außendurchmesser im Bereich des ersten Abschnitts, also des oberen Abschnitts des Bechers, gegebenenfalls etwas größer oder etwas kleiner als der Außendurchmesser im unteren Bereich des Gehäusebechers ist.

Im Unterschied zu einem herkömmlichen Becher für das Gehäuse einer Rundzelle, der über die gesamte Länge einer konstante Wandstärke und einen identischen Außendurchmesser bzw. einen identischen Außenumfang aufweist, resultiert aus der beschriebenen Umformung gemäß der Erfindung bevorzugt ein Becher, der zwar ebenfalls über die gesamte Länge einen identischen oder nahezu identischen Außendurchmesser bzw. einen identischen Außenumfang aufweist. Anders als bei einem herkömmlichen Becher mit konstanter Wandstärke ist bei dem Becher gemäß der erfindungsgemäßen Umformung im ersten Abschnitt der Becherwandung die Wandstärke jedoch größer als im zweiten Abschnitt der Becherwandung. Diese zusätzliche Wandstärke resultiert - anders als bei einem herkömmlichen gestuften Becher - in einem verringerten Innendurchmesser und nicht in einem größeren Außendurchmesser. Die eingesetzten elektrochemischen Komponenten sind vorzugsweise ausschließlich in dem Bereich des Bechers, der von dem zweiten Abschnitt der Becherwandung begrenzt ist, also in dem Bereich mit der der geringeren Wandstärke. Das von diesem Abschnitt umgebene Innenraumvolumen kann daher maximal für die elektrochemischen Komponenten, insbesondere einen zylindrisch ausgebildeten Elektrodenwickel mit maximalem Durchmesser, genutzt werden. In dem Bereich des Bechers, der von dem ersten Abschnitt der Becherwandung umgeben ist, wird das Innenraumvolumen und der Innendurchmesser durch die Umformung gemäß der erfindungsgemä-ßen Lösung etwas reduziert. Dies ist jedoch nicht nachteilig, da dieser Bereich lediglich für die Aufnahme und Fixierung eines Deckels und gegebenenfalls die elektrische Kontaktierung mindestens einer der Elektroden vorgesehen ist.

Der durch die Umformung gemäß der Erfindung reduzierte Innendurchmesser im Bereich des ersten Abschnitts der Becherwandung ist auch nicht beim Einsetzen der elektrochemischen Komponenten in den Becher hinderlich, da die Umformung des ersten Abschnitts der Becherwandung erst nach dem Einsetzen der elektrochemischen Komponenten erfolgt.

Insgesamt kann so vermieden werden, dass bei Verwendung eines gestuften Bechers zwei Becherabschnitte mit unterschiedlichen Außendurchmessern vorhanden sind. Herkömmlicherweise entspricht der Nenndurchmesser bei einer zylindrischen Rundzelle mit einem gestuften Becher dem größeren Außendurchmesser im oberen Abschnitt des Gehäusebechers. Bedingt hierdurch kann bei einer herkömmlichen Rundzelle das theoretisch verfügbare Volumen nicht optimal ausgenutzt werden. Die Erfindung hingegen vermeidet zwei unterschiedliche Außendurchmesser, und durch die beschriebene innere Abstufung kann das Innenraumvolumen optimal genutzt werden. Gleichzeitig wird durch die erhöhte Wandstärke im Deckelbereich des Bechers die benötigte Zuhaltekraft für die Dichtfunktion bereitgestellt, wobei gleichzeitig durch die niedrigere Wandstärke im übrigen Becherbereich der Materialbedarf reduziert und damit auch das Gewicht des Energiespeicherelements in vorteilhafter Weise verringert werden kann.

Vorteilhafterweise zeichnen sich die elektrochemischen Komponenten, die bei dem erfindungsgemäßen Verfahren verwendet werden, durch mindestens eines der folgenden zusätzlichen Merkmale aus:
a. Die elektrochemischen Komponenten umfassen einen Elektroden-Separator Verbund.
b. Die elektrochemischen Komponenten umfassen einen wickelförmigen Elektroden-Separator Verbund, insbesondere in Form eines zylindrischen wickelförmigen Elektroden-Separator Verbunds.

Besonders bevorzugt ist eine wickelförmiger Elektroden-Separator-Verbund gemäß dem vorgenannten Merkmal b). Der einzusetzende wickelförmige Elektroden-Separator-Verbund kann beispielsweise zusammen mit einer an den wickelförmigen Elektroden-Separator-Verbund angefügten Kontaktplatte, wie sie beispielsweise in der EP 3472879 B1 beschrieben ist, in an sich bekannter Weise bereitgestellt und in den Becher eingesetzt werden.

In der Regel umfasst der wickelförmiger Elektroden-Separator-Verbund mindestens eine bandförmige positive und mindestens eine bandförmige negative Elektrode, die spiralförmig gewickelt sind. Zwischen den Elektroden kann ein bandförmiger Separator angeordnet sein.

Prinzipiell können auch andere elektrochemische Komponenten eingesetzt werden, beispielsweise ein stapelförmiger Elektroden-Separator-Verbund. Dies kann beispielsweise dann vorteilhaft sein, wenn das Gehäuse der Rundzelle nicht eine kreisrunde Grundfläche, sondern beispielsweise eine ovale Grundfläche bzw. einen ovalen Becherboden aufweist.

In einer besonders bevorzugten Ausgestaltung des erfindungsgemäßen Verfahrens zeichnet sich das Verfahren durch das folgende zusätzliche Merkmal aus:
a. Vor dem Einfügen von elektrochemischen Komponenten in den inneren Bereich des Bechers wird der Becher im Bereich des ersten Abschnitts der Becherwandung aufgeweitet, vorzugsweise konisch aufgeweitet.

Durch die Aufweitung des Bechers im Bereich des ersten Abschnitts der Becherwandung wird erreicht, dass das Einfügen von elektrochemischen Komponenten in den Becher, beispielsweise das Einsetzen des wickelförmigen Elektroden-Separator-Verbunds, erleichtert wird. Dies ist insbesondere für einen automatisierten Fertigungsprozess vorteilhaft. Ein erleichtertes Einschieben der elektrochemischen Komponenten vereinfacht und beschleunigt den Herstellungsprozess und verringert die Ausschussrate.

Die Umformung des Bechers nach dem Einsetzen der elektrochemischen Komponenten kann an verschiedenen Zeitpunkten des nachfolgenden Montageprozesses erfolgen. Beispielsweise kann die Umformung unmittelbar nach dem Einsetzen der elektrochemischen Komponenten erfolgen. Hierfür kann ein separater Arbeitsgang vorgesehen sein. Die Umformung kann aber beispielsweise auch im Rahmen eines ohnehin vorgesehenen Arbeitsschritts, beispielsweise eines Kalibrierprozesses, erfolgen.

In einer besonders bevorzugten Ausführungsform erfolgt die Umformung in der folgenden Weise:
a. Die Umformung des Bechers im Bereich des ersten Abschnitts der Becherwandung erfolgt im Zuge eines Verschließens des Bechers mit dem Deckel oder danach.

Diese Ausführungsform lässt sich in besonders einfacher Weise in den Herstellungsprozess integrieren, ohne dass weitere separate Arbeitsschritte erforderlich wären. In bevorzugter Weise kann hierbei das Verschließen des Bechers durch Bördelung erfolgen, wobei zusammen mit der Bördelung das Umformen des Bechers im Bereich des ersten Abschnitts der Becherwandung in der oben beschriebenen Weise erfolgt.

Bei der Bördelung wird der Rand des Bechers radial nach innen über den Rand eines in die Öffnung des Bechers eingesetzten Deckels umgebogen. Eine zwischen Becher und Deckel angeordnete Dichtung wird hierbei komprimiert.

In einer anderen bevorzugten Ausführungsform kann die Umformung des Bechers gemäß dem erfindungsgemäßen Ansatz in der folgenden Weise erfolgen:
a. Die Umformung des Bechers im Bereich des ersten Abschnitts der Becherwandung erfolgt im Zuge einer Kalibrierung des Energiespeicherelements.

Im Rahmen dieser Kalibrierung kann insbesondere eine Kalibrierung der Höhe des Gehäuses des Energiespeicherelements erfolgen. Um gleichzeitig die Umformung zu bewirken, bedarf es entsprechend sowohl axialer als auch radialer Kräfte, die auf den Becher wirken müssen.

In einer besonders bevorzugten Ausgestaltung des erfindungsgemäßen Verfahrens wird zunächst ein gestufter Becher gemäß der obigen Beschreibung bereitgestellt. Nach dem optionalen Aufweiten des Bechers in dem ersten, also oberen Abschnitt, werden die elektrochemischen Komponenten, insbesondere ein wickelförmiger Elektroden-Separator-Verbund, in den Becher einsetzt. Anschließend wird der obere Abschnitt des Bechers, der sich durch die erhöhte Wandstärke auszeichnet, gezielt von außen nach innen eingedrückt. Der obere Abschnitt des Bechers mit der erhöhten Wandstärke befindet sich dabei außerhalb des Abschnitts des Bechers, in die die elektrochemischen Komponenten eingesetzt sind. Durch das Umformen wird auch eine optionale vorhergehende Aufweitung des Bechers im oberen Bereich rückgängig gemacht.

In besonders vorteilhaften Ausführungsformen zeichnet sich das Verfahren weiterhin durch das folgende zusätzliche Merkmal aus:
a. Der bereitzustellende Becher ist durch einen Tiefziehprozess hergestellt.

Ein Tiefziehprozess eignet sich in besonderer Weise für die Bereitstellung eines gestuften Bechers. Mit einem Tiefziehprozess können metallische Gehäusebecher sehr kostengünstig und in großer Stückzahl hergestellt werden. Prinzipiell kann der gestufte Becher für das erfindungsgemäße Verfahren jedoch auch auf andere Weise hergestellt werden.

In besonders bevorzugten Ausführungsformen zeichnen sich die zylindrischen Rundzellen, die mit dem erfindungsgemäßen Verfahren herstellbar sind, durch einen der folgenden Formfaktoren aus:
a. Die zylindrische Rundzelle weist den Formfaktor 18650 auf,
b. Die zylindrische Rundzelle weist den Formfaktor 21700 auf.

Bei diesen bevorzugten Formfaktoren, die die Größe (Durchmesser und Länge) der zylindrischen Rundzellen definieren, handelt es sich um übliche Standardgrößen, die weit verbreitet sind. Darüber hinaus eignet sich das erfindungsgemäße Verfahren auch für Rundzellen mit anderen Formfaktoren, insbesondere auch für größere Rundzellen.

Mit dem erfindungsgemäßen Herstellungsverfahren können die Rundzellen im Hinblick auf Gewicht, Materialverbrauch und optimierte Innenraumausnutzung für eine maximale gravimetrische/volumetrische Leistungs- und Energiedichte optimiert werden.

Wenn beispielsweise eine Rundzelle mit dem Formfaktor 18650 hergestellt werden soll, kann bei der Herstellung ein gestufter Becher für das Gehäuse bereitgestellt werden, der im ersten Abschnitt, also im oberen Abschnitt, einen Durchmesser d = 18,3 mm und im zweiten Abschnitt, also im längeren, unteren Bereich, einen Durchmesser d = 18,1 mm aufweist. Dieses Delta von 0,2 mm bedingt herkömmlicherweise ein nicht optimal genutztes Innenraumvolumen, da der Nenndurchmesser der Zelle von dem größeren Durchmesser (18,3 mm) definiert wird. Bei einer herkömmlichen Rundzelle mit einem gestuften Gehäusebecher und einem Nenndurchmesser von 18,3 mm könnte theoretisch ein größerer Außendurchmesser der eingesetzten elektrochemischen Komponenten genutzt werden, wenn der Durchmesser von 18,3 mm über die ganze Länge der Rundzelle zur Verfügung stehen würde. Dies würde bei einer Rundzelle mit dem Formfaktor 18650, ausgehend von einer Kapazität von 2,5 Ah, in einem Kapazitätsgewinn von zusätzlichen 2,3% resultieren. Dieser Kapazitätsgewinn wird durch die vorliegend beschrieben Erfindung ermöglicht.

Zweckmäßigerweise befindet sich der erste Abschnitt der Becherwandung mit der größeren Wandstärke oberhalb der Zone mit den elektrochemischen Komponenten, also beispielsweise der Wickelzone. Auch die Übergangszone zwischen dem ersten Abschnitt und dem zweiten Abschnitt der Becherwandung befindet sich vorzugsweise oberhalb der Zone mit den elektrochemischen Komponenten.

In besonders bevorzugten Ausgestaltungen des erfindungsgemäßen Verfahrens handelt es sich bei dem herzustellenden Energiespeicherelement um eine Lithium-Ionen-Zelle.

Die Erfindung umfasst weiterhin ein elektrochemisches Energiespeicherelement, das mit den beschriebenen Verfahren herstellbar ist.

Schließlich umfasst die Erfindung ein elektrochemisches Energiespeicherelement in Form einer zylindrischen Rundzelle, das sich durch die folgenden Merkmale auszeichnet:
a. Das elektrochemische Energiespeicherelement umfasst ein Gehäuse aus einem metallischen Becher und einem Deckel,
b. der metallische Becher weist einen Becherboden, eine umlaufende Becherwandung und eine Becheröffnung auf, wobei
   i. sich die Becherwandung in Längsrichtung in einen ersten Abschnitt und einen zweiten Abschnitt untergliedert, und wobei sich der erste Abschnitt zwischen der Becheröffnung und dem zweiten Abschnitt erstreckt und der zweite Abschnitt sich zwischen dem ersten Abschnitt und dem Becherboden erstreckt, und wobei
   ii. die Wandstärke der Becherwandung in dem ersten Abschnitt größer ist als die Wandstärke der Becherwandung in dem zweiten Abschnitt.

Erfindungsgemäß zeichnet sich das elektrochemische Energiespeicherelemente weiter dadurch aus, dass
c. der Außendurchmesser der Becherwandung in dem ersten Abschnitt an den Außendurchmesser der Becherwandung in dem zweiten Abschnitt angeglichen ist.

Vorzugsweise ist bei dem erfindungsgemäßen elektrochemischen Energiespeicherelement das folgende zusätzliche Merkmal vorgesehen:
a. Der Außendurchmesser der Becherwandung in dem ersten Abschnitt entspricht dem Außendurchmesser der Becherwandung in dem zweiten Abschnitt.

Bezüglich weiterer Merkmale und Vorteile des erfindungsgemäßen elektrochemischen Energiespeicherelements wird auf die obige Beschreibung verwiesen.

Nachfolgend werden Ausführungsbeispiele der Erfindung anhand der Zeichnungen näher erläutert. Die einzelnen Merkmale können jeweils für sich oder in Kombination miteinander verwirklicht sein.

### KURZE BESCHREIBUNG DER ZEICHNUNGEN

In den Zeichnungen zeigen:
- Figur 1A-D: schematische Darstellung der einzelnen Schritte des erfindungsgemäßen Verfahrens (nicht maßstabsgetreu);
- Figur 2A, B: photographische Darstellung eines Abschnitts aus einem längsgeschnittenen, gestuften Gehäusebecher (Teilfigur 2A) mit Vergrößerungsausschnitt (Teilfigur 2 B);
- Figur 3: photographische Darstellung eines Abschnitts aus einem längsgeschnittenen, gestuften Gehäusebecher nach Aufweitung und
- Figur 4A, B: photographische Darstellung eines Abschnitts aus einem längsgeschnittenen, gestuften Gehäusebecher (Teilfigur 4A) mit Vergrößerungsausschnitt (Teilfigur 4B) nach der Umformung gemäß dem erfindungsgemäßen Verfahren.

### BESCHREIBUNG BEVORZUGTER AUSFÜHRUNGSBEISPIELE

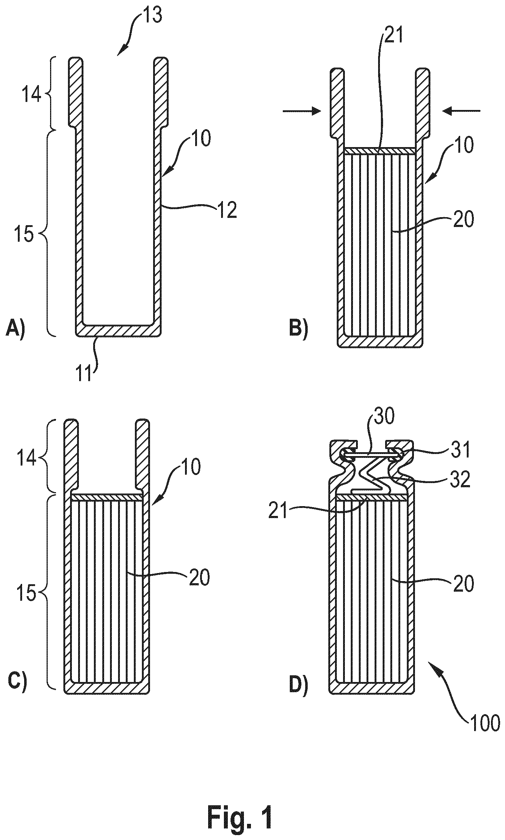

**Figur 1** illustriert in schematischer Weise die verschiedenen Schritte des erfindungsgemäßen Verfahrens. Zunächst wird ein metallischer, gestufter Becher 10 für das Gehäuse der herzustellenden zylindrischen Rundzelle bereitgestellt **(Teilfigur 1A).** Der Becher 10 umfasst einen Becherboden 11, eine umlaufende Becherwandung 12 und eine dem Becherboden 11 gegenüberliegende Becheröffnung 13. Der Becher 10 ist in einem Längsschnitt schematisch dargestellt (nicht maßstabsgetreu).

Die Becherwandung 12 untergliedert sich in Längsrichtung in einen ersten Abschnitt 14 und einen zweiten Abschnitt 15. Der obere erste Abschnitt 14 liegt zwischen der Becheröffnung 13 und dem zweiten Abschnitt 15. Der untere zweite Abschnitt 15 liegt zwischen dem ersten Abschnitt 14 und dem Becherboden 11. Bei dem Becher 10 handelt es sich um einen gestuften Becher, der sich dadurch auszeichnet, dass die Wandstärke in dem ersten Abschnitt 14 größer als die Wandstärke in dem zweiten Abschnitt 15 ist. Die Wandstärke in dem ersten Abschnitt 14 kann beispielsweise 0,25 mm betragen. Die Wandstärke in dem zweiten Abschnitt 15 kann beispielsweise 0,15 mm betragen.

Bei dem Becher handelt es sich vorzugsweise um ein Tiefziehteil, das in an sich bekannter Weise aus einem Blechzuschnitt hergestellt wird. Im Bereich des Becherbodens 11 kann die Wandstärke, bedingt durch den Tiefziehprozess bei der Herstellung des Bechers 10, etwas stärker als die Wandstärke im ersten Abschnitt 14 ausgebildet sein, beispielsweise 0,3 mm.

Die Abstufung in der Materialstärke der Becherwandung 12 liegt außen am Becher 10, so dass sich zwei unterschiedliche Außendurchmesser des Bechers 10 ergeben. Der Außendurchmesser ist im Bereich des ersten Abschnitts 14 größer als im Bereich des zweiten Abschnitts 15. Bei einem Becher für die Herstellung beispielsweise einer Rundzelle mit dem Formfaktor 18650 kann der Außendurchmesser im oberen Bereich, also im Bereich des ersten Abschnitts 14 beispielsweise 18,3 mm betragen. Im unteren Bereich, also im Bereich des zweiten Abschnitts 15, kann der Außendurchmesser beispielsweise 18,1 mm betragen.

Gemäß **Teilfigur 1B** wird in den metallischen Becher 10 zunächst ein wickelförmiger Elektroden-Separator-Verbund 20 als elektrochemische Komponente des Energiespeicherelements eingesetzt. Der wickelförmige Elektroden-Separator-Verbund 20 kann gegebenenfalls bereits beim Einsetzen mit einer Kontaktplatte 21 zur Kontaktierung der Elektroden verbunden sein. Nach dem Einsetzen des Elektroden-Separator-Verbunds 20 wird im Bereich des ersten Abschnitts 14 durch Druck von außen der erste Abschnitt 14 derart umgeformt, dass sich der Außendurchmesser im Bereich des Abschnitts 14 an den Außendurchmesser im Bereich des zweiten Abschnitts 15 angleicht. Diese Umformung ist in der Teilfigur B durch Pfeile angedeutet. Hieraus resultiert der in **Teilfigur 1C** dargestellte Becher 10, bei dem die Becherwandung im ersten Abschnitt 14 derart umgeformt ist, dass sich ein über die Länge des Bechers 10 konstanter Außendurchmesser ergibt.

Besonders vorteilhaft ist es, wenn der Übergang zwischen den unterschiedlichen Wandstärken zwischen dem ersten Abschnitt 14 und dem zweiten Abschnitt 15 so angeordnet ist, dass er sich außerhalb der Wickelzone befindet. Vorteilhafterweise befindet sich dieser Übergang knapp über der Wickelzone, um das Innenvolumen optimal für die elektrochemischen Komponenten ausnutzen zu können.

Schließlich erfolgt die weitergehende Montage des elektrochemischen Energiespeicherelements 100 gemäß **Teilfigur 1D.** Hierbei wird in diesem Ausführungsbeispiel ein Deckel 30 eingesetzt, der über eine Dichtung 31 gegenüber der Becherwandung abgedichtet und isoliert ist Der Deckel 30 ist über ein Ableiterelement 32 elektrisch mit dem Elektroden-Separator-Verbund 20 bzw. mit der Kontaktplatte 21 verbunden. Selbstverständlich sind auch andere Ausführungsformen der Deckelbaugruppe und der Elektrodenanbindung möglich.

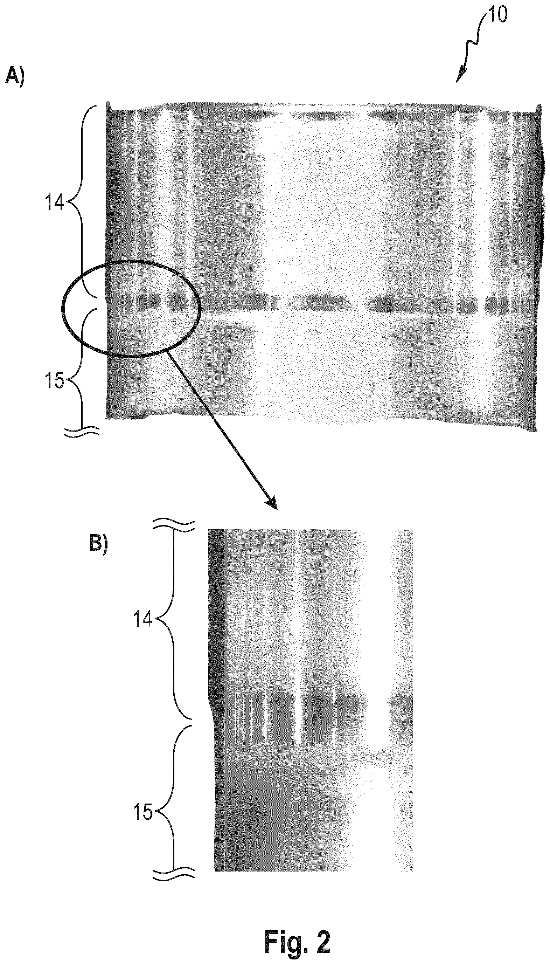

**Figur 2** zeigt eine photographische Darstellung des in Längsrichtung geschnittenen Bechers zur Illustrierung der Wandstärke am Übergang zwischen dem ersten Abschnitt 14 und dem zweiten Abschnitt 15 bei einem gestuften Becher 10. **Teilfigur 2A** zeigt einen Ausschnitt der Becherwandung über die Breite des Bechers 10. **Teilfigur 2B** zeigt einen vergrößerten Ausschnitt. Der hier dargestellte Becher 10 illustriert die Ausgangssituation des gestuften Bechers, der für die erfindungsgemäße Herstellung von zylindrischen Rundzellen bereitgestellt wird. Zu erkennen ist die größere Wandstärke der Becherwandung im Bereich des oberen ersten Abschnitts 14 und die kleinere Wandstärke der Becherwandung im Bereich des unteren zweiten Abschnitts 15. Der Unterschied in der Wandstärke wirkt sich auf die Außenseite und damit auf den Außenumfang des Bechers aus.

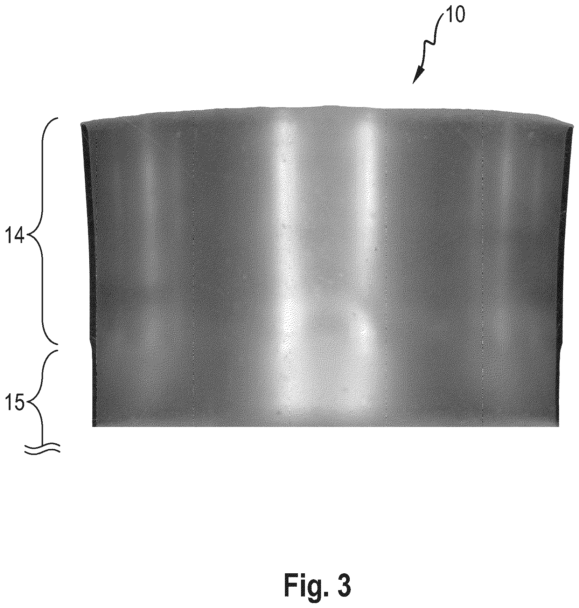

In besonders bevorzugten Ausgestaltungen des erfindungsgemäßen Verfahrens wird der obere Bereich des bereitgestellten gestuften Bechers 10 vor dem Einfügen der elektrochemischen Komponenten in den Becher aufgeweitet, wodurch das Einsetzen beispielsweise eines wickelförmigen Elektroden-Separator-Verbunds erleichtert werden kann. Ein derart aufgeweiteter Becher ist in **Figur 3** als photographische Darstellung gezeigt. Die Aufweitung betrifft insbesondere den oberen ersten Abschnitt 14 der Becherwandung. Besonders vorteilhaft und einfach zu realisieren ist eine konische Aufweitung des ersten Abschnitts 14.

Versuche der Erfinder haben gezeigt, dass es besonders vorteilhaft ist, wenn beispielsweise bei einem Becher für eine Rundzelle mit dem Formfaktor 21700 die Aufweitung, bezogen auf den Durchmesser der Rundzelle, 0,7 mm nicht überschreitet. Andernfalls kann es zu einer wellenförmigen Verformung bei der späteren Umformung des ersten Abschnitts der Becherwandung kommen. Besonders geeignet ist bei einer Rundzelle mit dem Formfaktor 21700 beispielsweise eine Aufweitung von 0,6 mm bezogen auf den Durchmesser der Rundzelle.

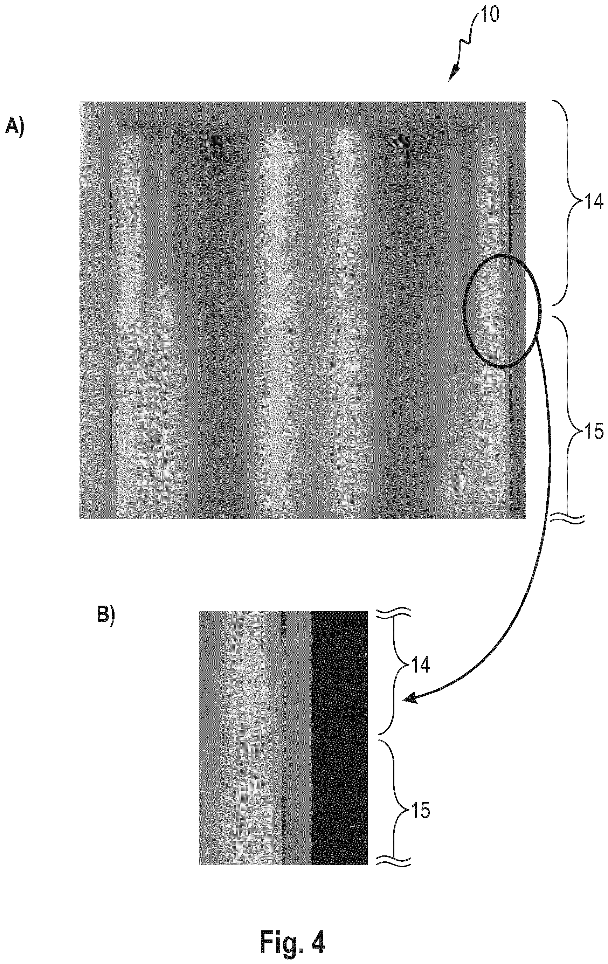

**Figur 4** zeigt eine photographische Darstellung des oberen Bereichs des Bechers 10 nach der erfindungsgemäßen Umformung des ersten Abschnitts 14 von außen nach innen. **Teilfigur 4A** zeigt einen Ausschnitt der Becherwandung über die Breite des Bechers 10. **Teilfigur 4B** zeigt einen vergrößerten Ausschnitt. Vermessungen der Wandstärke in diesem Beispiel ergaben eine Wandstärke von 0,268 mm im Bereich des Abschnitts 14 und eine Wandstärke von 0,172 mm im Bereich des Abschnitts 15.

Durch die erfindungsgemäße Umformung wurde erreicht, dass sich der Außendurchmesser im Bereich des ersten Abschnitts 14 dem Außendurchmesser im Bereich des zweiten Abschnitts 15 angleicht. Vorzugsweise entspricht nach der Umformung der Außendurchmesser im ersten Abschnitt 14 dem Außendurchmesser im zweiten Abschnitt 15. In Längsrichtung weist der Becher 10 nach der Umformung folglich einen gleichbleibenden Außendurchmesser auf. Hierdurch wird eine optimale Volumenausnutzung durch die Anpassung des Nenndurchmessers an das tatsächlich zur Verfügung stehende Innenraumvolumen des Bechers erreicht. Gleichzeitig können die Vorteile eines gestuften Bechers im Hinblick auf die Stabilität der Wandung im ersten Abschnitt 14 für die Ausbildung der Deckelanordnung genutzt werden. Gleichzeitig wird eine Materialeinsparung und eine Gewichtsreduktion durch die geringere Wandstärke der Gehäusewandung im zweiten Abschnitt 15 erreicht.

## Patentansprüche

1. Verfahren zur Herstellung eines elektrochemischen Energiespeicherelements (100) in Form einer zylindrischen Rundzelle mit einem Gehäuse aus einem Becher (10) und einem Deckel (30) mit den folgenden Verfahrensschritten:
a) Bereitstellen eines metallischen Bechers (10) mit einem Becherboden (11), einer umlaufenden Becherwandung (12) und einer Becheröffnung (13), wobei
i. sich die Becherwandung (12) in Längsrichtung in einen ersten Abschnitt (14) und einen zweiten Abschnitt (15) untergliedert, und wobei sich der erste Abschnitt (14) zwischen der Becheröffnung (13) und dem zweiten Abschnitt (15) erstreckt und der zweite Abschnitt (15) sich zwischen dem ersten Abschnitt (14) und dem Becherboden (11) erstreckt, und wobei
ii. die Wandstärke der Becherwandung in dem ersten Abschnitt (14) größer ist als die Wandstärke der Becherwandung in dem zweiten Abschnitt (15), und wobei
iii. der Außendurchmesser der Becherwandung in dem ersten Abschnitt (14) größer ist als der Außendurchmesser der Becherwandung in dem zweiten Abschnitt (15),
b) Einfügen von elektrochemischen Komponenten (20) in den inneren Bereich des Bechers (10), der von dem zweiten Abschnitt (15) der Becherwandung umgeben ist,
c) weitergehende Montage des elektrochemischen Energiespeicherelements,
**dadurch gekennzeichnet, dass**
d) nach dem Einfügen von elektrochemischen Komponenten (20) in den inneren Bereich des Bechers (10) eine Umformung des ersten Abschnitts (14) der Becherwandung von außen nach innen derart erfolgt, dass sich der Außendurchmesser der Becherwandung im ersten Abschnitt (14) dem Außendurchmesser der Becherwandung im zweiten Abschnitt (15) angleicht.

2. Verfahren nach Anspruch 1 mit mindestens einem der folgenden zusätzlichen Merkmale:
a) Die elektrochemischen Komponenten umfassen einen Elektroden-SeparatorVerbund,
b) die elektrochemischen Komponenten umfassen einen wickelförmigen Elektroden-Separator Verbund (20).

3. Verfahren nach Anspruch 1 oder Anspruch 2 mit dem folgenden zusätzlichen Merkmal:
a) Vor dem Einfügen von elektrochemischen Komponenten (20) in den inneren Bereich des Bechers wird der Becher im Bereich des ersten Abschnitts (14) der Becherwandung aufgeweitet, vorzugsweise konisch aufgeweitet.

4. Verfahren nach einem der vorhergehenden Ansprüche mit dem folgenden zusätzlichen Merkmal:
a) Die Umformung des Bechers im Bereich des ersten Abschnitts (14) der Becherwandung erfolgt im Zuge eines Verschließens des Bechers (10) mit dem Deckel (30).

5. Verfahren nach Anspruch 4 mit dem folgenden zusätzlichen Merkmal:
a) Das Verschließen des Bechers (10) erfolgt durch Bördelung.

6. Verfahren nach einem der Ansprüche 1 bis 3 mit dem folgenden zusätzlichen Merkmal:
a) Die Umformung des Bechers im Bereich des ersten Abschnitts (14) der Becherwandung erfolgt im Zuge einer Kalibrierung des Energiespeicherelements.

7. Verfahren nach einem der vorhergehenden Ansprüche mit dem folgenden zusätzlichen Merkmal:
a) Der bereitzustellende Becher (10) ist durch einen Tiefziehprozess hergestellt.

8. Verfahren nach einem der vorhergehenden Ansprüche mit einem der folgenden zusätzlichen Merkmale:
a) Die zylindrische Rundzelle weist den Formfaktor 18650 auf,
b) Die zylindrische Rundzelle weist den Formfaktor 21700 auf.

9. Verfahren nach einem der vorhergehenden Ansprüche mit dem folgenden zusätzlichen Merkmal:
a) Das elektrochemische Energiespeicherelement (100) ist eine Lithium-Ionen-Zelle.

10. Elektrochemisches Energiespeicherelement (100), herstellbar nach einem Verfahren gemäß einem der Ansprüche 1 bis 9.

11. Elektrochemisches Energiespeicherelement in Form einer zylindrischen Rundzelle mit den folgenden Merkmalen:
a) Das elektrochemische Energiespeicherelement umfasst ein Gehäuse aus einem metallischen Becher (10) und einem Deckel (30),
b) der metallische Becher weist einen Becherboden (11), eine umlaufende Becherwandung (12) und eine Becheröffnung (13) auf, wobei
i. sich die Becherwandung in Längsrichtung in einen ersten Abschnitt (14) und einen zweiten Abschnitt (15) untergliedert, und wobei sich der erste Abschnitt (14) zwischen der Becheröffnung (13) und dem zweiten Abschnitt (15) erstreckt und der zweite Abschnitt (15) sich zwischen dem ersten Abschnitt (14) und dem Becherboden (11) erstreckt, und wobei
ii. die Wandstärke der Becherwandung in dem ersten Abschnitt (14) größer ist als die Wandstärke der Becherwandung in dem zweiten Abschnitt (15),
**dadurch gekennzeichnet, dass**
c) der Außendurchmesser der Becherwandung in dem ersten Abschnitt (14) an den Außendurchmesser der Becherwandung in dem zweiten Abschnitt (15) angeglichen ist.

12. Elektrochemisches Energiespeicherelement nach Anspruch 11 mit dem folgenden zusätzlichen Merkmal:
a) Der Außendurchmesser der Becherwandung in dem ersten Abschnitt (14) entspricht dem Außendurchmesser der Becherwandung in dem zweiten Abschnitt (15).

13. Elektrochemisches Energiespeicherelement nach Anspruch 11 oder Anspruch 12, weiter **gekennzeichnet durch** mindestens eines der Merkmale gemäß einem der Ansprüche 6 bis 9.
